Europäisches Patentamt

European Patent Office

Office européen des brevets

(11) Veröffentlichungsnummer: **0 067 959**
**B1**

(12) **EUROPÄISCHE PATENTSCHRIFT**

(45) Veröffentlichungstag der Patentschrift :
**30.10.85**

(21) Anmeldenummer : **82104230.6**

(22) Anmeldetag : **14.05.82**

(51) Int. Cl.⁴ : **C 02 F   9/00, B 01 D 21/00,**
**B 01 D 33/04, B 01 D 37/00**

(54) **Transportable Vorrichtung zum Aufbereiten von verbrauchten Emulsionen, Lösungen und Industrieabwässern oder dergleichen.**

(30) Priorität : **24.06.81 DE 3124738**

(43) Veröffentlichungstag der Anmeldung :
**29.12.82 Patentblatt 82/52**

(45) Bekanntmachung des Hinweises auf die Patenterteilung : **30.10.85 Patentblatt 85/44**

(84) Benannte Vertragsstaaten :
**AT BE CH FR GB IT LI NL SE**

(56) Entgegenhaltungen :
**DE-A- 2 916 860**
**DE-C-   179 286**
**DE-C-   214 136**
**US-A- 3 545 619**
**US-A- 4 234 424**

(73) Patentinhaber : **Ralf F. Piepho Abwassertechnik GmbH**
**Rittergut 2**
**D-3015 Wennigsen 5 (DE)**

(72) Erfinder : **Piepho, Ralf F.**
**Rittergut 2**
**D-3015 Wennigsen 5 (DE)**

(74) Vertreter : **Rücker, Wolfgang, Dipl.-Chem.**
**Hubertusstrasse 2**
**D-3000 Hannover 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft eine transportable Vorrichtung zur Aufbereitung von verbrauchten Emulsionen, Lösungen, Industrieabwässern oder dergleichen mit Reaktionsbehältern, einem Ablaufstutzen und einem mit einem Vlies belegten Bandfilter und einem darunter angeordneten Filtratbehälter sowie am Abwurfende des Bandfilters angeordneten Presswalzen.

Vorrichtungen dieser Art in stationärer Ausführung sind bekannt, Sie haben den Nachteil, daß der Antransport der verbrauchten Emulsion, Lösung, Industrieabwässer und dergleichen kostenaufwendig ist und die Gesamtleistung der Anlage entsprechend klein bleibt. Es ist daher auch bereits vorgeschlagen worden, solche Anlagen fahrbar auszugestalten (DE-A 1 459 515).

Es ist auch bekannt, bei einer solchen Anlage wenigstens 2 unabhängig von einander betreibbare Reaktionskammern vorzusehen, die wechselweise arbeiten, und ein Bandfilter, das unter allen vorhandenen Reaktionskammern hindurchführt und über das hintere Ende hinausragt, wobei der über das hintere Ende hinausragende Teil schwenkbar aufgebildet und mit Preßwalzen versehen ist, die eine weitgehende Entwässerung des auf dem Bandfilter liegenden Niederschlages gestatten (AT-B 345 196).

Nachteilig bei dieser Ausgestaltung ist der Umstand, daß die Reaktionsbehälter völlig unabhängig von einander arbeiten und entweder nacheinander oder gleichzeitig in Betrieb sind. Es ist weiterhin von Nachteil, daß die Flüssigkeit, insbesondere Wasser, zusammen mit dem darin enthaltenen Niederschlag oder der darin enthaltenen Ausflockung, die teils in der Flüssigkeit suspendiert ist, teils auf der Flüssigkeit schwimmt, gleichzeitig auf das Bandfilter abgegeben werden, so daß die Filtrationsgeschwindigkeit sich bald verlangsamt und daher der Durchgang des großen Wasservolumens durch das Bandfilter unvorteilhaft verlängert wird, weil bereits die ersten Niederschläge oder Flocken das Bandfilter im zunehmenden Maße zusetzen.

Aus der US-A 3 545 619 ist eine ortsfeste Anlage bekannt, mit der Wasser aus Flüssen oder Seen aufbereitet wird. Das mit Chemikalien versetzte Grundwasser durchströmt nacheinander einen Mischbehälter, einen Ausflockungsbehälter, einen Absetzbehälter und einen Filter, der rückspülbar ist, um schließlich in einem Sammelbehälter aufgefangen zu werden.

Abgesehen davon, daß diese Anlage ortsfest ausgebildet ist und zur Aufbereitung von Fluß- oder Seenwasser bestimmt ist, würden die einzelnen Aggregate der Anlage weder geeignet sein, Industrieabwässer z. B. Emulsionen möglichst optimal zu brechen und auszuflocken, noch die Ausflockung wirkungsvoll von der Flüssigkeit abzuscheiden, zumal das bei Industrieabwässern zu verwendende chemische Trennmittel ein Gemisch ist, welches Feststoffe enthält, die die Ausflockungen gleichzeitig auch deponierfähig machen müssen.

Es hat sich auch gezeigt, daß bei diesen bekannten Einrichtungen die Reaktionszeit oft nicht eingehalten wird oder auch einhaltbar ist, weil der Raum, in dem die Flüssigkeit mit dem chemischen Trennmittel zur Reaktion gebracht wird, eine ausreichende Verweilzeit nicht gestattet, oder eine solche nicht eingehalten wird, was daran liegt, daß man das Reaktionsprodukt nach dem Auftreten der Ausflockung und die durch das Rührgerät herbeigeführte Vermischung als ausreichend ansieht und den Inhalt auf das Bandfilter dann abläßt.

Der vorliegenden Erfindung liegt daher die Aufgabe zugrunde, eine Vorrichtung der eingangs beschriebenen Art zu schaffen, die diese Nachteile nicht besitzt, insbesondere eine ausreichende Verweilzeit für die Reaktion zwischen dem chemischen Reaktionsmittel und der aufzubereitenden Flüssigkeit gewährleistet, eine nahezu vollständige Trennung zwischen Ausflockung oder Niederschlag und der Flüssigkeit ermöglicht, so daß beide getrennt auf das Bandfilter angeleitet werden können, ohne daß die Filtrationsgeschwindigkeit über Gebühr verlängert wird und mithin der gesamte Filtrationsvorgang schnell vonstatten geht, und daß quasi ein kontinuierlicher Betrieb durchführbar ist.

Gelöst wird diese Aufgabe bei einer Vorrichtung der eingangs beschriebenen Art dadurch, daß wenigstens zwei in Serie geschaltete Reaktionsbehälter zur Bildung von Ausflockungen und Niederschlägen vorgesehen sind mit darin enthaltenen Mischturbinen, wobei lediglich eine Dosiervorrichtung dem ersten Reaktionsbehälter ein chemisches Trennmittel zur Bildung von Ausflockungen und Niederschlägen zudosiert, daß die Vorrichtung so ausgebildet ist, daß die zu behandelnde Flüssigkeit alle Reaktionsbehälter durchströmt und in Absetzbehälter fließt, in welchen sich Reaktionsprodukt und Flüssigkeit trennen, und ein umlaufendes, endloses Zellenband Niederschläge und Ausflockungen aus den Absetzbehältern entfernt, und daß eine Rohrleitung für den Überlauf vorgesehen ist, die von dem Absetzbehälter zum Bandfilter führt, das mit zwei hintereinander liegenden Mulden zur getrennten Filtration von Flüssigkeit und Niederschlag bzw. Ausflockung versehen ist.

Weitere Merkmale der Erfindung sind in den angefügten Ansprüchen gekennzeichnet.

Die Erfindung wird nun anhand der Zeichnung, die Ausführungsbeispiele zeigt, näher erläutert.

In der Zeichnung stellen dar :

Figur 1 eine Draufsicht auf die erfindungsgemäße Vorrichtung ;

Figur 2 einen Schnitt etwa auf der Linie II-II der Fig. 1 in Richtung der Pfeile gesehen ;

Figur 3 einen Schnitt etwa auf der Linie III-III der Fig. 1 in Richtung der Pfeile gesehen ;

Figur 4 eine Draufsicht ähnlich der Ausgestaltung nach Fig. 1 mit einem einfachen Absetzbehälter ;

Figur 5 einen Schnitt auf der Linie V-V der Fig. 4 in Richtung der Pfeile gesehen ;

Figur 6 einen Schnitt auf der Linie VI-VI der Fig. 4 in Richtung der Pfeile gesehen und

Figur 7 eine weitere Ausgestaltung in der Seitenansicht entsprechend Fig. 3.

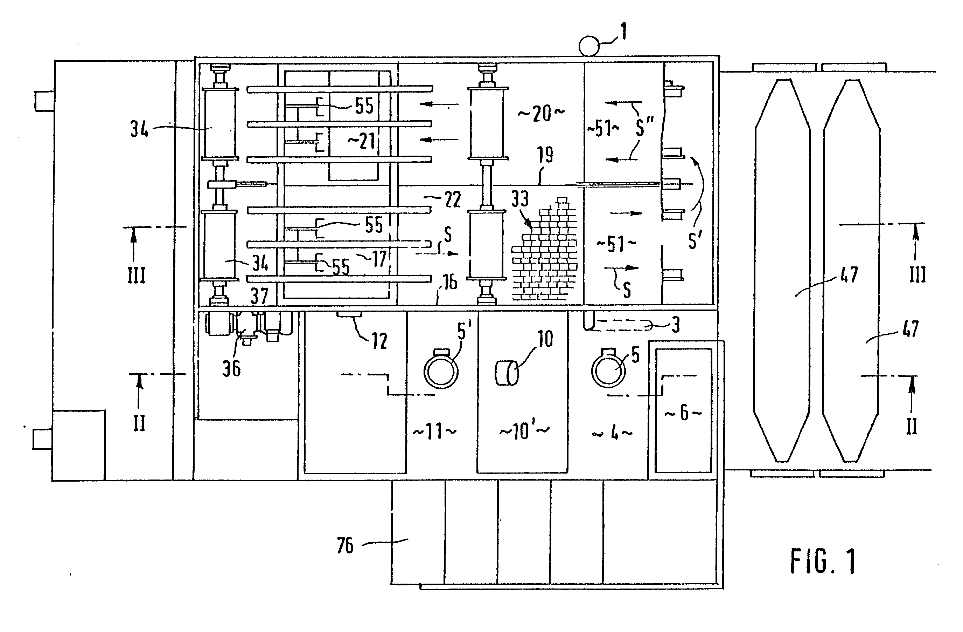

Wie aus Fig. 1 hervorgeht, besteht die Vorrichtung aus mehreren miteinander verbundenen und zusammenwirkenden Abteilungen. Das aufzubereitende Abwasser wird bei 1 in eine Rohrleitung 2 eingeleitet und strömt aus dem Rohrleitungsteil 3 in einen ersten Reaktionsbehälter 4, mit einer Mischturbine 5. In diesem Reaktionsbehälter wird von einer Dosiereinrichtung 6 ein chemisches Präparat zudosiert, das sich aus mehreren chemischen Verbindungen zusammensetzt und dazu dient, das in dem Reaktionsbehälter 4 befindliche Abwasser so zu behandeln, daß sich die klare Flüssigkeit, insbesondere Wasser, von den anderen suspendierten oder gelösten Stoffen trennt und diese Ausflockungen sich niederschlagen oder suspendiert bleiben.

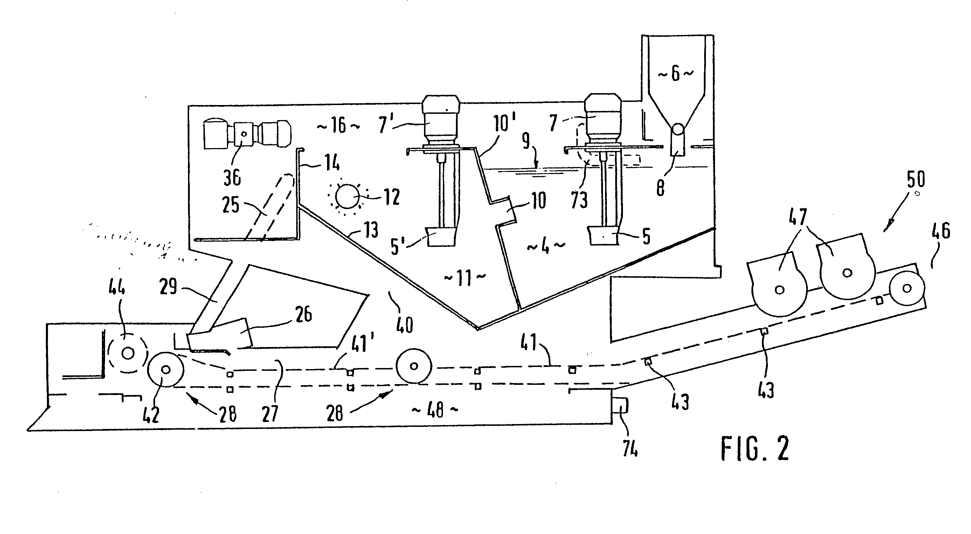

Solche chemischen Trenn- oder Reaktionsmittel sind an sich bekannt. Durch die Mischturbine 5, die von einem Elektromotor 7 angetrieben wird, werden die verschiedenen Reaktionspartner innig miteinander vermischt und es kommt zu einer Reaktion. Das Trennmittel fällt aus der Dosiereinrichtung 6 über den Rohrstutzen 8 in die Flüssigkeit, deren Pegel 9 in Fig. 2 angedeutet ist. Aus dem Reaktionsbehälter 4 strömt das Gemisch durch die Öffnung einer Trennwand 10' in einen zweiten Reaktionsbehälter 11, der ebenfalls eine Mischturbine 5' mit elektrischem Antrieb 7' besitzt. In diesem zweiten Reaktionsbehälter 11 findet eine Nachreaktion statt, so daß sich der Niederschlag oder die Ausflockung, die angefallen ist, entwickeln und nachreagieren kann.

Zu diesem Zwecke kann die Mischturbine 5' ein anderes Strömungsbild, aber auch eine andere Strömungsgeschwindigkeit als die Mischturbine 5 erzeugen. Der Stand der Flüssigkeit in dem zweiten Nachreaktionsbehälter entspricht natürlich dem Pegel 9 im Reaktionsbehälter 4.

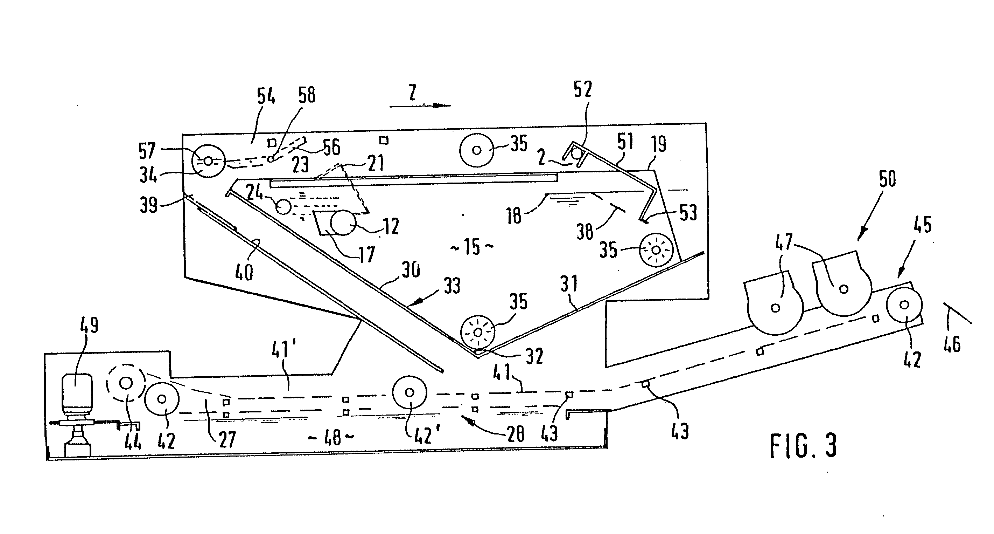

Die nun mit Trennmitteln oder Ausflockungen oder Niederschlag vermischte Flüssigkeit strömt dann durch die Öffnung 12 in einen benachbarten Absetzbehälter, der in Fig. 3 dargestellt ist.

Der zweite Nachreaktionsbehälter 11 ist auf der linken Seite, unter Perücksichtigung von Fig. 2, durch die Wandungen 13 und 14 geschlossen. Der Abschluß zum Absetzbehälter 15 erfolgt durch die Wand 16.

Anstelle von zwei Reaktionsbehältern 4 und 11, können auch drei derartige Behälter hintereinander angeordnet sein, falls dies für gewisse Abwässer oder aufzubereitende Flüssigkeiten erforderlich ist. Dadurch wird lediglich die Baulänge der Vorrichtung vergrößert.

Aus Fig. 3 ist nun zu ersehen, daß der Absetzbehälter 15 über den an die Öffnung 12 anschließenden Rohrstützen 17 mit dem Flüssigkeitsgemisch versorgt wird. Die Flüssigkeit füllt nun den Absetzbehälter etwa bis zum Pegel 18 aus, und strömt dabei auf einem Strömungswege, der durch die Trennwand 19 bestimmt ist.

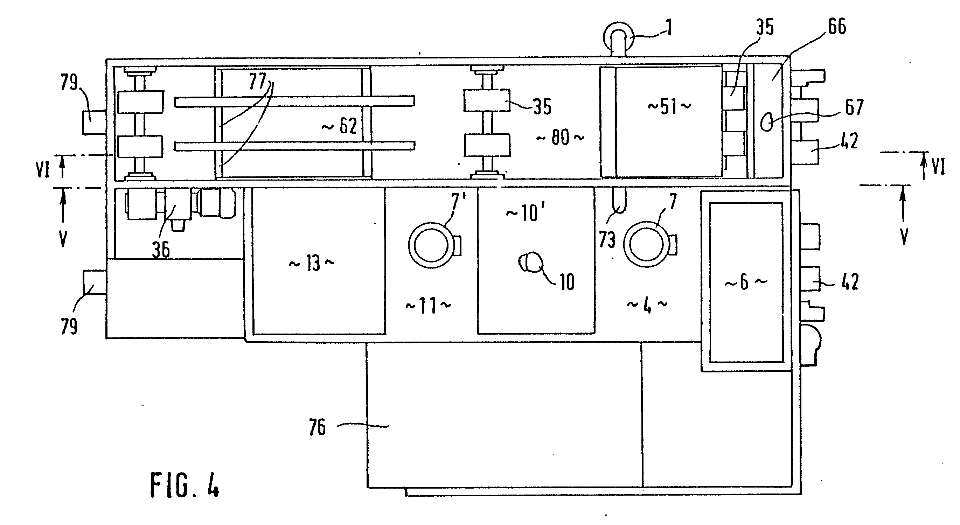

Die Flüssigkeit füllt also zunächst den Behälter und strömt dabei in Richtung der Pfeile S bei S' um das Ende der Trennwand herum in den gegenüberliegende Behälter 20, in der die Strömung mit der Bezeichnung S'' angegeben ist, zu einer Einlaufrinne 21, die eine besondere Ausgestaltung aufweist, welche aus Fig. 3 ersichtlich ist. Es ist zu erkennen, daß diese Einlaufrinne kastenförmige Gestalt hat und über den Pegel 18 der Flüssigkeit in den beiden Kammern 20 und 22 des Absetzbehälters 15 hinausragt. Die Flüssigkeit strömt also von links, unter Berücksichtigung der Fig. 4, in den inneren Raum der Einlaufrinne ein, strömt dann durch die Rohrleitung 23 und durch die Öffnung 24, in die in Fig. 2 dargestellte Rohrleitung 25, um schließlich über eine Verteilerleitung 26 in eine muldenförmige Vertiefung 27 des Bandfilters 28 zu strömen.

In der Leitung 25 ist ein Absperrventil 29 enthalten. In den beiden Abteilungen 20 und 22 des Absetzbehälters 15 sammelt sich nun auf den schrägen Wänden 30 und 31 der Niederschlag an, insbesondere aber auch im tiefsten Punkt 32. Um diesen Niederschlag nun abtransportieren zu können, ist für jede Abteilung 20 und 22 des Absetzbehälters 15, ein endloses Zellenband vorgesehen, von dem in dem Behälter 22 bei 33 ein Teil dargestellt ist. Diese beiden endlosen Zellenbänder laufen über Antriebs- und Führungsrollen, die mit den Bezugszeichen 34 und 35 bezeichnet sind. Die Antriebsrollen 34 erhalten ihren Antrieb durch einen Getriebemotor 36, der seitlich außerhalb der Trennwand 16 angeordnet ist und die Welle 37 antreibt. Das Zellenband läuft in Richtung des Pfeiles Z um (Fig. 3). Beim Durchgang des Zellenbandes, welches gestrichelt bei 38 dargestellt ist, nimmt nun das Zellenband den auch auf den Wänden 30 und 31 und in dem Scheitelpunkt liegenden Niederschlag in seinen Zellen auf und trägt ihn aus der Flüssigkeit hinaus, bis er in dem Raum 39 aus den Zellen des Zellenbandes 33 herausfällt auf die schräge Fläche 40 und über diese in die Mulde 41 des Bandfilters fließt. Dieser Fließvorgang findet ohne Schwierigkeiten statt, da der Niederschlag noch beträchtliche Wassermengen enthält, die ihn auf das Bandfilter bei 41 befördern. Das Bandfilter selbst besteht aus einem endlosen umlaufenden Maschendrahtband, welches über die Rollen 42 läuft und unterhalb der Rollen wieder zurück. Das obere Trum des Maschendrahtbandes wird von den Stützleisten und Stäben 43 gestützt und ist auf seiner oberen Seite mit einem Papiervlies, welches als Filter wirkt, bedeckt. Dieses Papiervlies wird in an sich bekannter Weise von einer Rolle 44 abgewickelt und läuft bei dem Maschendrahtband mit, bis es am Ende bei 45 sich von dem Maschendrahtband löst, wie das durch den Strich 46 angedeutet ist.

Bei 47 sind zwei Preßwalzen angeordnet, die den Niederschlag auf dem Vliespapier zusätzlich entwässern. Das Filtrat sammelt sich in dem Behälter 48 und wird durch eine Pumpe 49 abgesaugt.

Es ist zu erkennen, daß durch diese Ausgestaltung eine beträchtlich längere Verweilzeit und damit ein Zuendegehen der Reaktion gewährleistet ist und daß Flüssigkeit, insbesondere Wasser, und Reaktionsprodukt in getrennte Mulden des Bandfilters abgegeben werden. Das am Ende der Preßstrecke austretende, mit Niederschlag beladene Papiervlies 46 kann in einem getrennten Sammelbehälter aufgefangen und deponiert werden. Die Preßstrecke 50 ist vorzugsweise so ausgebildet, daß ein Winkel zur Horizontale zumindest im begrenzten Bereiche veränderbar ist.

Auf einige erfinderischen Besonderheiten sei noch mit Bezug auf Fig. 3 hingewiesen. Das Zellenband 38 wird durch eine winkelförmige Platte 51 beaufschlagt und zwar besitzt diese winkelförmige Platte an ihrem obigen Ende eine U-förmige Rille 52, mit der sie schwenkbar auf der Rohrleitung 2 aufliegt und mit ihrem abgewinkelten Ende bei 53 das Zellenband beaufschlagt. Wie aus Fig. 1 hervorgeht, erstreckt sich diese Platte 51 praktisch über die gesamte Breite der Kammer 22 und auch in der Kammer 20 ist eine solche Platte identischer Ausgestaltung enthalten.

Es ist zu erkennen, daß diese Platte mit ihrem abgewinkelten Ende 53 nicht nur das Zellenband beaufschlagt und damit gespannt hält, sondern daß auch die Oberflächenschicht der in dieser Kammer enthaltenen Flüssigkeit, praktisch von Wand zu Wand abgesperrt ist, so daß die Flüssigkeit nur unterhalb der Platte 51 in die benachbarten Kammer strömen kann. Dadurch wird verhindert, daß Niederschlag oder dispergierte Flocken, die sich noch nicht abgesetzt haben, mitgerissen werden.

Aus Fig. 3 ist weiter ersichtlich, daß etwa in der Mitte des endlosen Bandfilters 28 eine Walze 42' angeordnet ist, die in dem Bandfilter eine Erhebung erzeugt, so daß zwei muldenförmige Bandfilter 41 und 41' entstehen. Wie bereits oben beschrieben, wird nun das praktisch frei von Sediment erhaltene Wasser, über die Rohrleitung 25 in die erste Mulde 41' geleitet. Eine Ausbreitung des dort hingeleiteten Wassers wird durch die erhöht angeordnete Führungswalze 42' verhindert, so daß das Papiervlies des Bandfilters zwar naß, aber praktisch ohne Niederschlag in die größere Mulde 41 gelangt. Hier nun wird der Niederschlag aufgefangen, der über die schräge Fläche 40 zugeführt wird.

Wie aus Fig. 1 und 3 ersichtlich, sind unter dem oberen Trum 54 des Zellenbandes 33 Klopfer 55 angeordnet, die über ein Hebelsystem 56 von zwei Nocken 57 der Antriebswalze 34 betätigt werden. Bei jedem Umlauf der Antriebswalze beziehungsweise der Antriebswelle 34 beziehungsweise 37, wird der Klopfer 55 zweimal über das Hebelsystem 56 betätigt, das auf der Achse 58 schwenkbar gelagert ist. Die Klopfer 55 schlagen von unten gegen das Zellenband, so daß der darin noch haftengebliebene Niederschlag zurück in die Kammer 20 beziehungsweise 22 fällt. Der Wassereinlauf für die Rohrleitung 25, ist durch eine Überdachung der Einlaufrinne 21 geschützt, so daß hier praktisch nur reines Wasser abströmt, nicht hingegen Niederschlag.

In Fig. 4 ist eine einfachere Ausgestaltung einer Vorrichtung gemäß der Erfindung dargestellt, die im wesentlichen der der Fig. 1 und 3 entspricht.

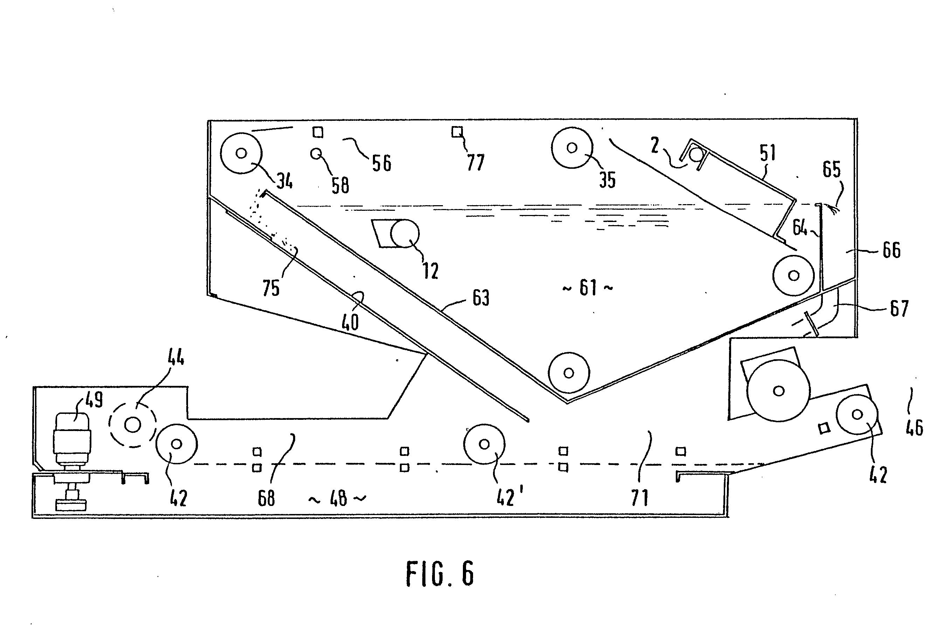

Wie aus Fig. 4 hervorgeht, sind ebenfalls wieder zwei Reaktionsbehälter vorgesehen, die die Bezugszeichen 59 und 60 tragen. Aus diesen Reaktionsbehältern mit den Turbinen 5 und 5', fließt die Flüssigkeit durch die Öffnung 12 in einen Absetzbehälter 61 über die in Fig. 4 angedeutete Rohrleitung 62. Auch in diesem Absetzbehälter ist ein umlaufendes Zellenband, welches durch die Linie 63 in Fig. 6 dargestellt ist, vorhanden.

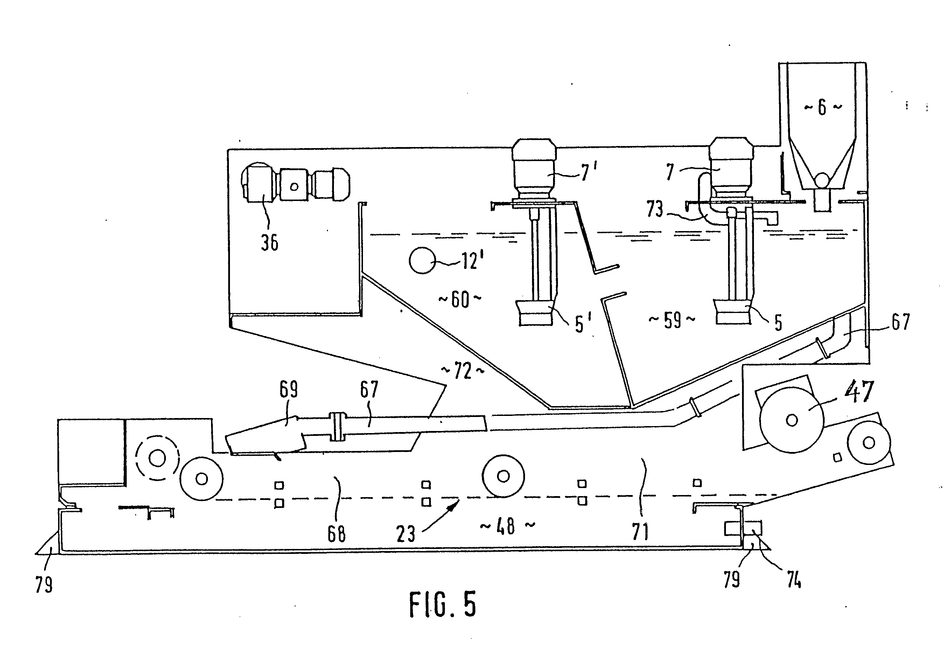

Die Ausgestaltung dieses Absetzbehälters 61 entspricht den Behältern 20 beziehungsweise 22. Jedoch läuft hier überschüssiges und niederschlagsfreies Wasser über die Überlaufwand 64, wie bei 65 angedeutet, in einen Raum 66, der über eine Rohrleitung 67, wie aus Fig. 5 ersichtlich, zur ersten Bandfiltermulde 68 führt. Die Rohrleitung 67 ist an ihrem Ende bei 69 mit einem vermittels Schwimmer 70 gesteuerten Ventil versehen, so daß der Pegel des Flüssigkeitsstandes in der Mulde 68 gesteuert werden kann. Die zweite Mulde 71 des Bandfilters nimmt dann wieder den Niederschlag auf, der über die schräge Wand oder Rinne 72 zugeführt wird. Das Bezugszeichen 36 bezeichnet wieder den Antrieb für das Zellenband und die Bezugszeichen 7 und 7' den Antrieb für die Mischturbinen. Die Zuführung des zu reinigenden Wassers erfolgt jeweils über die Leitung 73.

Bei 6 ist wieder das Dosiergerät zu sehen, welches das Reaktionsmittel in den Reaktionsbehälter 59 eindosiert und anstelle zweier Preßwalzen, wie in Fig. 1, ist hier nur eine Preßwalze 47 gezeigt.

Das Filtrat, welches unter dem Bandfilter 28 anfällt, sammelt sich in dem Filtratbehälter 48 und wird über eine Rohrleitung 74, wie auch in der ersten Ausgestaltung (Fig. 2), abgesaugt oder abgeleitet.

Das mit dem Niederschlag beladene Vlies verläßt wieder die Vorrichtung bei 46, wie in der ersten Ausgestaltungsform. Bei 75 ist der auf die schräge Fläche 40 herabfallende Niederschlag angedeutet.

Das Bezugszeichen 76 in Fig. 1 und Fig. 4 bezeichnet eine Treppe, die zur Beobachtung, Wartung und Versorgung der Vorrichtung dient, beziehungsweise zur Beschickung der Dosiereinrichtung 6 mit neuem Trennmittel. Auch bei dieser Ausgestaltung ist die auf dem Zuleitungsrohr 2 schwenkbar gelagerte Platte 51 vorhanden, in der ebenfalls mit Bezug auf Fig. 2, beschriebenen Ausgestaltung. Im oberen horizontalen Bereich ist das Zellenbands 33 vermittels zweier horizontaler Stäbe 77 geführt. Dies gilt für beide Ausgestaltungen.

Das Bandfilter erstreckt sich in beiden Ausgestaltungen in seiner Breite sowohl unter die Reaktionsbehälter 4 und 11, beziehungsweise 59 und 60, als auch unter die Absetzbehälter 20 und 22, beziehungsweise Absetzbehälter 80. Die Pratzen 79 dienen zur Befestigung des Gerätes auf dem Fußboden, nichtsdestoweniger ist es transportfähig und kann von einem Ort zum anderen bewegt werden, falls das erforderlich ist.

Die Preßwalzen 47 können angetrieben sein, werden aber vorzugsweise durch das darunter hindurchlaufende Bandfilter in Umdrehungen versetzt und können sich in vertikaler Richtung mit Bezug auf das Bandfilter frei auf und abbewegen.

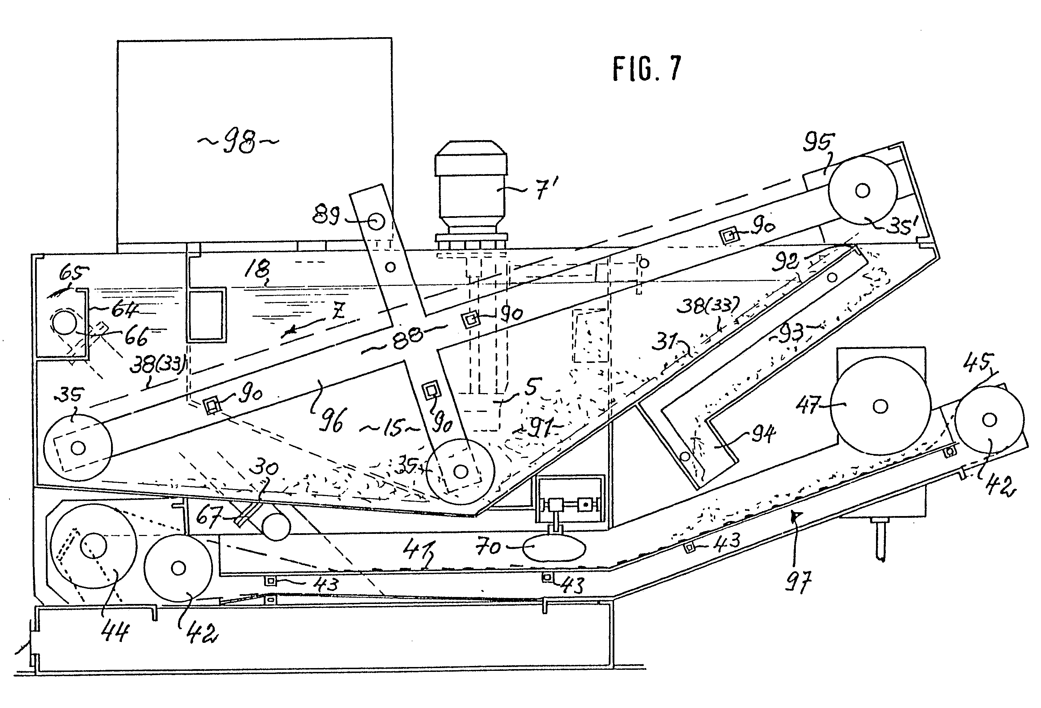

In Fig. 7 ist eine vorteilhafte erfinderische Ausgestaltung der Vorrichtung in der Seitenansicht ähnlich der der Fig. 3 dargestellt. Diese Ausgestaltung entspricht im Prinzip der der Fig. 3, jedoch wird hierbei das Zellenband in besonderer Weise gehalten und geführt. Wie aus der Darstellung zu erkennen ist, ist in dem Absetzbehälter 15 ein rahmenartiges Gestell 88 enthalten, über das das Zellenband 38, 33 läuft. Dieses Gestell ragt mit einem Ende, das die Antriebsrolle 35′ für das Zellenband enthält, über die Vorrichtung nach oben hinaus. Das Gestell ist in geeigneter Weise in der Maschine gehalten und wird lediglich von oben eingesetzt und kann auch von oben ohne zusätzliche Montagearbeiten, beispielsweise Entfernung von Stopfbuchsen, Ausbau von Antriebswellen oder dgl., nach oben herausgenommen werden, falls dies erforderlich ist. Dazu ist das rahmenartige Gestell 88 mit einem Ansatz 89 mit Bohrung versehen, an der ein Kranhaken beispielsweise angreifen kann. Die Bezugszeichen 90 bezeichnen Abstandshalter zwischen den beiden kreuzförmigen Seitenteilen 96. Bei 95 ist der Antrieb für die Antriebsrolle 35′ untergebracht. Eine weitere Besonderheit von fortschrittlicher Wirkung ist der Umstand, daß zwar das Zellenband wie in Fig. 3 den Schlamm ebenfalls auf einer schrägen Wand nach oben fördert, dieser aber nicht in ein mehr oder weniger horizontales Teil des Bandfilters 41 fällt, sondern auf eine Schrägfläche, wie bei 97 dargestellt. Der Schlamm durchläuft dabei einen schrägen Kanal 93 und fällt aus einer Auslaßöffnung 94 auf diese Schrägfläche. Er wird von dem unter Berücksichtigung der Fig. 7 von links nach rechts laufenden Bandfilter unter die Preßwalze 47 bewegt, aber bevor der Schlamm diese Walze erreicht, wird er zufolge der Schräglage des Bandfilters schon sehr stark entwässert, so daß die Trocken- oder Kompaktierungsstrecke des Bandfilters, die in Fig. 3 noch zwei Preßwalzen aufwies, erheblich verkürzt werden kann bzw. ein deponierbarer Schlamm erhalten wird, der schneller und früher auf einen geringen Wassergehalt bringbar ist.

Die sonstigen Bezugszeichen der Fig. 7 entsprechen denen der übrigen Figuren. Das Bezugszeichen 98 bezeichnet einen Aufsatz, der beispielsweise Dosiereinrichtungen und sonstiges Hilfsgerät enthalten kann.

**Patentansprüche**

1. Transportable Vorrichtung zur Aufbereitung von verbrauchten Emulsionen, Lösungen, Industrieabwässern oder dergleichen mit einem Reaktionsbehälter mit Mischturbine zur Bildung von Ausflockungen und Niederschlägen, mit einem Ablaufstutzen und einem darunter liegenden mit Vlies belegten Bandfilter, unter welchem ein Filtratbehälter angeordnet ist, sowie Presswalzen, die auf dem Abwurfende des Bandfilters liegen, dadurch gekennzeichnet, daß wenigstens zwei in Serie geschaltete Reaktionsbehälter (4, 11) zur Bildung von Ausflockungen und Niederschlägen vorgesehen sind mit darin enthaltenen Mischturbinen (5, 5′), wobei lediglich eine Dosiervorrichtung (6) dem ersten Reaktionsbehälter (4) ein chemisches Trennmittel zur Bildung von Ausflockungen und Niederschlägen zudosiert, daß die Vorrichtung so ausgebildet ist, daß die zu behandelnde Flüssigkeit alle Reaktionsbehälter (4, 11) durchströmt und in Absetzbehälter (20, 15, 22, 61) fließt, in welchen sich Reaktionsprodukt und Flüssigkeit trennen, und ein umlaufendes, endloses Zellenband (38) Niederschläge und Ausflockungen aus den Absetzbehältern entfernt, und daß eine Rohrleitung für den Überlauf vorgesehen ist, die von dem Absetzbehälter (15) zum Bandfilter (28) führt, das mit zwei hintereinander liegenden Mulden (41, 41′, bzw. 68, 71) zur getrennten Filtration von Flüssigkeit und Niederschlag bzw. Ausflockung versehen ist.

2. Vorrichtung nach Anspruch 1, dadurch gekennzeichnet, daß ein Dosiergerät (6) über dem ersten der in Serie geschalteten Reaktionsbehälter (4) zur Zuführung des chemischen Trennmittels angeordnet ist und daß die Reaktionsbehälter über eine in der sie trennenden Wand (10′) angeordnete Öffnung (10) in Verbindung stehen.

3. Vorrichtung nach Anspruch 1, dadurch gekennzeichnet, daß der letzte der in Serie geschalteten Reaktionsbehälter über eine Rohrleitung (17) mit den Absetzbehältern (20, 15, 22 bzw. 61) in Verbindung steht und daß die Absetzbehälter (20, 22) durch die Trennwand (19) in zwei miteinander verbundene Behälter unterteilt ist.

4. Vorrichtung nach Anspruch 1 bis 3, dadurch gekennzeichnet, daß in jedem Absetzbehälter (20, 22, 61), die im wesentlichen pyramidenförmige Gestalt haben, ein Zellenband (38) umläuft, das den sich in den Behältern absetzenden Niederschlag aus den Behältern heraustransportiert und auf eine schräg verlaufende Fläche (40) abwirft, die zum Bandfilter (28) führt.

5. Vorrichtung nach Anspruch 4, dadurch gekennzeichnet, daß das Zellenband über eine Führungsrolle (35) läuft, die im Scheitel des pyramidenförmigen Absetzbehälters angeordnet ist, so daß sich das Zellenband auf den ebenen geradflächigen Wänden (30, 31) entlangbewegt.

6. Vorrichtung nach Anspruch 4 bis 5, dadurch gekennzeichnet, daß das Zellenband oberhalb der Absetzbehälter (20, 22 und 15), mit seinem oberen Trum auf den Stäben (77) entlangläuft, die das obere Trum (54) des Zellenbandes führen und

zwischen denen Klopfer (55) angeordnet sind, die gegen das Zellenband schlagen und die durch Nocken (57) und Hebelsysteme (58) und die Antriebswelle (37) des Zellenbandes betätigt werden.

7. Vorrichtung nach Anspruch 1 bis 6, dadurch gekennzeichnet, daß das die aufzubereitende Flüssigkeit zuführende Rohr (1, 2) im oberen Teil durch die Absetzbehälter (15, 20, 22) hindurchführt und als Schwenklager für aufgenängte Platten (51) dient, die mit einer Abwinklung (53) unterhalb des Flüssigkeitspegels (9, 18) auf dem Zellenband (33) aufruhen und mit ihren oberen Enden aus der Flüssigkeit herausragen.

8. Vorrichtung nach Anspruch 1 bis 7, dadurch gekennzeichnet, daß der Überlauf aus den Absetzbehältern (15, 20, 22) bei (24) den Absetzbehälter verläßt und der Einlauf durch eine Einlaufrinne (21) gegen in der Oberfläche schwimmenden Niederschlag geschützt ist und über die Rohrleitung (25, 67) zu einer muldenförmigen Vertiefung (41') des Bandfilters (28) führt, wobei der Auslaß aus der Rohrleitung (25) über eine Verteilerleitung (26) mit Schwimmventil (70) geregelt ist.

9. Vorrichtung nach Anspruch 1 bis 8, dadurch gekennzeichnet, daß die Einteilung des Bandfilters in zwei muldenförmige Abschnitte (41', 41 und 71, 68) durch eine Führungsrolle (42') erfolgt, die eine Erhebung im Bandfilterobertrums erzeugt, und daß der von dem Zellenband (33, 63) auf die Schrägfläche (40) abgeworfene Niederschlag (75) in den zweiten muldenförmigen Ausschnitt (71) gelangt, der stromaufwärts von dem liegt, welchem das im wesentlichen reine Wasser zufließt.

10. Vorrichtung nach Anspruch 1, dadurch gekennzeichnet, daß wenigstens zwei in Serie geschaltete Reaktionsbehälter vorgesehen sind, in denen jeweils eine von Elektromotoren (7, 7') angetriebene Mischturbine (5, 5') läuft, wobei das zur Reaktion erforderliche chemische Trennmittel in dem stromaufwärts liegenden ersten Reaktionsbehälter (4, 59) enthalten ist.

11. Vorrichtung nach Ansprüchen 1 bis 7 und 9 bis 10, dadurch gekennzeichnet, daß der Überlauf aus der Absetzkammer (80) über eine Überlaufwand (64) in die Rohrleitung (67) zum Bandfilter erfolgt.

12. Vorrichtung nach Anspruch 1 bis 11, dadurch gekennzeichnet, daß im Austragsende des Bandfilters auf diesem wenigstens eine Preßwalze (47) angeordnet ist.

13. Vorrichtung nach Anspruch 1 bis 12, dadurch gekennzeichnet, daß das Zellenband (33, 38) in einem mit Führungsrollen (35) versehenen Rahmengestell (88) angeordnet ist, das insgesamt in die Absetzkammer (15) einsetzbar ist und herausnehmbar ist.

14. Vorrichtung nach Anspruch 13, dadurch gekennzeichnet, daß die obere Führungsrolle (35') die angetriebene Rolle ist und über die Oberkante des Absetzbehälters (15) hinausragt.

15. Vorrichtung nach Anspruch 13 und 14, dadurch gekennzeichnet, daß das Zellenband mit einem Teil sich über eine schräg nach oben erstreckende Wand (31) bewegt, die am oberen Ende mit einer Abwurfkante (92) versehen ist, unter der ein Schacht (93) mit einer Auslauföffnung (94) nach unten führt und die Auslauföffnung (94) oberhalb eines schräg nach oben führenden Teiles des Bandfilters endet.

16. Vorrichtung nach Anspruch 13 bis 15, dadurch gekennzeichnet, daß das das Zellenband (33, 38) tragende rahmenartige Gestell eine flache dreieckige Zellenbandführung gewährt, wobei das Gestell mit einem Arm (89) versehen ist, der ein Herausnehmen und Einsetzen des Zellenbandes gestattet.

17. Vorrichtung nach Anspruch 13 und 16, dadurch gekennzeichnet, daß das rahmenartige Gestell aus je einem seitlichen Träger (95) besteht, die durch Abstandshalter (90) miteinander verbunden sind.

## Claims

1. Transportable device for the treatment of used emulsions, solutions, industrial effluents and the like with a reaction vessel with a turbine mixer to create flocculations and precipitates, with a downcomer and a fleece-covered belt filter underneath it, under which a filtrate container is arranged, as well as compression rollers placed at the output end of the belt filter, characterized by the fact that at least two reaction vessels connected in series (4, 11) are provided to form flocculations and precipitates with turbine mixers (5, 5') contained therein, in such a way that only one dosing apparatus (6) feeds the first reaction vessel (4) with a chemical separating agent to form flocculations and precipitates, that the apparatus is so designed that the liquid to be treated flows through all the reaction vessels (4, 11) and flows into settling tanks (20, 15, 22, 61) in which reaction product and liquid separate from one another, and a continuous circulating belt (38) removes precipitates and flocculations from the settling tanks, and that a pipe is provided for overflow, passing from the settling tank (15) to the belt filter (28), which, with two troughs placed one behind the other (41, 41', or 68, 71), is provided for the separate filtration of liquid and precipitate or flocculation.

2. Apparatus in accordance with claim 1, characterized by the fact that a dosing device (6) above the first of the reaction vessels connected in series (4) is arranged to feed in the chemical separating agent and that the reaction vessels are connected by an aperture (10) arranged in the wall (10') separating them.

3. Apparatus in accordance with claim 1, characterized by the fact that the last of the vessels connected in series is connected by a pipe (17) with the settling tanks (20, 75, 22 or 61) and that the settling tank (20, 22) is divided by the partition (19) into two interconnected vessels.

4. Apparatus in accordance with claims 1 to 3, characterized by the fact that a filter belt (38) revolves in each settling tank (20, 22, 61), which is essentially shaped like a pyramid, and transports the precipitate settling in the bessels away from the vessels and dumps them on a slanting surface (40) leading to the belt filter (28).

5. Apparatus in accordance with claim 4, characterized by the fact that the revolving belt runs over a guide roller (35) arranged at the top of the pyramid-shaped settling tank, so that the revolving belt moves along the level even-surfaced walls (30, 31).

6. Apparatus in accordance with claims 4 to 5, characterized by the fact that the revolving belt runs along above the settling tank (20, 22 and 15) with its upper strand on the rods (77), which guide the upper strand (54) of the revolving belt and between which knockers (55) are arranged which strike against the revolving belt and which are activated by cams (57) and compound lever arrangements (58) and the drive shaft (37) of the revolving band.

7. Apparatus in accordance with claim 1 to 6, characterized by the fact that the pipe (1, 2) feeding the liquid to be treated in the upper part passes through the settling tanks (15, 20, 22) and acts as flexible support for suspended plates (51) which, with a bend (53) below the liquid level (9, 18) rest on the revolving belt and protrude at their upper end from the liquid.

8. Apparatus in accordance with claims 1 to 7, characterized by the fact that the overflow from the settling tanks (15, 20, 22) leaves the settling tank at (24) and the inlet is protected by an inflow channel (21) against precipitate floating on the surface and leads through the pipe (25, 67) to a trough-shaped deepening (41') of the belt filter (28), so that the discharge from the pipe (25) is regulated by a distributor pipe (26) with floating valve (70).

9. Apparatus in accordance with claims 1 to 8, characterized by the fact that division of the belt filter into two through-shaped sections (41', 41 and 71, 68) is effected by a guide roll (42') which produces a rise in the upper strand of the belt filter, and that the precipitate (75) discharged from the revolving band (33, 63) on to the slanting surface (40) passes into the second trough-shaped section (71) lying upstream of the one into which essentially clean water flows.

10. Apparatus in accordance with claim 1, characterized by the fact that at least two reaction vessels connected in series are provided, in which in each case there is a turbine mixer (5, 5') driven by electric motors (7, 7'), so that the separating agent required for the reaction is contained in the first reaction vessel (4, 59) lying upstream.

11. Apparatus in accordance with claims 1 to 7 and 9, 10, characterized by the fact that the overflow from the settling tank (80) proceeds over an overflow wall (64) into the pipe (67) to the belt filter.

12. Apparatus in accordance with claims 1 to 11, characterized by the fact that at least one press roller (47) is arranged on the belt filter at its discharge end.

13. Apparatus in accordance with claims 1 to 12, characterized by the fact that the revolving band (33, 38) is arranged in a frame structure (88) provided with guide rollers (35) which can be inserted as a whole into the settling chamber (15) or likewise removed from it.

14. Apparatus in accordance with claim 13, characterized by the fact that the upper guide roller (35') is the driven roller and projects beyond the outside edge of the settling vessel (15).

15. Apparatus in accordance with claims 13 and 14, characterized by the fact that the revolving band as to one part moves over a slanting upward-sloping wall (31) which is provided at its upper end with a discharge edge (92) under which a chute (93) leads downwards and the discharge aperture (94) terminates above a part of the belt filter passing obliquely upwards.

16. Apparatus in accordance with claims 13 to 15, characterized by the fact that the framelike structure carrying the revolving band (33, 38) affords a flat triangular revolving band control so that the frame is provided with one arm (89) permitting the revolving band to be taken out and put in.

17. Apparatus in accordance with claims 13 and 16, characterized by the fact that the frame structure consists of one beam (95) on each side, these being linked by distance pieces (90).

## Revendications

1. Dispositif transportable pour le traitement d'émulsions, solutions, eaux résiduaires industrielles usées ou assimilées, avec un réservoir de réaction possédant une turbine de mélange pour la formation de produits de floculations et de dépôts, avec une tubulure de décharge et, disposé en dessous, un filtre à bande garni d'un non-tissé, sous lequel se trouve un réservoir à filtrat, et avec des rouleaux presseurs, qui se trouvent à l'extrémité de déchargement du filtre à bande, caractérisé en ce qu'au moins deux réservoirs de réaction (4, 11) installés en série sont prévus pour la formation de produits de floculation et de dépôts, avec, dans ces réservoirs, des turbines de mélange (5, 5'), un seul dispositif de dosage (6) dosant dans le premier réservoir de réaction (4) un agent chimique de séparation destiné à la formation de produits de floculation et de dépôts, que le dispositif est conçu de telle sorte que le liquide à traiter traverse tous les réservoirs de réaction (4, 11) et s'écoule dans des réservoirs de décantation (20, 15, 22, 61), dans lesquels le produit de réaction et le liquide se séparent et qu'une bande alvéolaire continue sans fin (38) enlève des réservoirs de décantation les dépôts et les produits de floculation ; et qu'il est prévu pour le trop-plein une tuyauterie qui va du réservoir de décantation (15) au filtre à bande (28), lequel est pourvu de deux auges disposées l'une en aval de l'autre (41, 41' et 68, 71) pour assurer une filtration distincte du liquide et du dépôt ou des produits de floculation.

2. Dispositif selon la revendication 1, caractérisé en ce qu'un appareil doseur (6) est disposé, pour amener l'agent chimique de séparation, au-dessus du premier des réservoirs de réaction (4) montés en série, et que les réservoirs de réaction sont reliés par l'intermédiaire d'une ouverture (10) aménagée dans la cloison (10') qui les sépare.

3. Dispositif selon la revendication 1, caractérisé en ce que le dernier des réservoirs de réaction montés en série est, par l'intermédiaire d'une tuyauterie (17) relié aux réservoirs de décantation (20, 15, 22 et 61), et que les réservoirs de décantation (20, 22) sont, par l'intermédiaire de la cloison (19), subdivisés en deux réservoirs reliés l'un à l'autre.

4. Dispositif selon les revendications 1 à 3, caractérisé en ce que, dans chaque réservoir de décantation (20, 22, 61) qui a une forme essentiellement pyramidale, passe une bande alvéolaire (38), qui transporte vers l'extérieur des réservoirs le dépôt qui se dépose dans les réservoirs, et les rejette sur une surface s'étendant d'une manière inclinée (40), laquelle conduit au filtre à bande (28).

5. Dispositif selon la revendication 4, caractérisé en ce que la bande alvéolaire passe sur un galet de guidage (35), lequel est disposé au sommet du réservoir de décantation pyramidal, de façon que la bande alvéolaire se déplace le long des parois planes et rectilignes (30, 31).

6. Dispositif selon les revendications 4 ou 5, caractérisé en ce que la bande alvéolaire court au-dessus du réservoir de décantation (20, 22 et 15), son brin supérieur étant soutenu par des barres (77) qui guident le brin supérieur (54) de la bande alvéolaire et entre lesquelles sont disposés des heurtoirs (55) qui heurtent la bande alvéolaire et qui sont actionnés par des cames (57) et des systèmes de levier (58) et l'arbre d'entraînement (57) de la bande alvéolaire.

7. Dispositif selon les revendications 1 à 6, caractérisé en ce que le tube (1, 2) qui amène le liquide à traiter, se trouvant dans la partie supérieure, traverse le réservoir de décantation (15, 20, 22) et sert de palier de pivotement pour des plaques suspendues (51) qui, par un relèvement (53), s'appuient en dessous du niveau du liquide (9, 18) sur la bande alvéolaire (33) et qui, par leur extrémité supérieure, dépassent du liquide.

8. Dispositif selon les revendications 1 à 7, caractérisé en ce que le trop-plein des réservoirs de décantation (15, 20, 22) sort du réservoir de décantation en (24), et que l'entrée est protégée contre les dépôts flottants sur la surface par une goulotte d'entrée (21) et conduit, par la tuyauterie (25, 67), à un renfoncement (41') en forme d'auge du filtre à bande (28), la sortie de la tuyauterie (28) étant ajustée par l'intermédiaire d'une conduite de distribution (56) possédant une vanne à flotteur (70).

9. Dispositif selon les revendications 1 à 8, caractérisé en ce que la subdivision du filtre à bande en deux tronçons en forme d'auge (41', 41 et 71, 68) est réalisée par un galet de guidage (42') qui produit une élévation dans le brin supérieur du filtre à bande, et que le dépôt (75) déchargé sur la surface inclinée (40) à partir de la bande alvéolaire (33, 63), arrive dans le deuxième tronçon (71) en forme d'auge, qui se trouve en aval de celui sur lequel s'écoule l'eau essentiellement pure.

10. Dispositif selon la revendication 1, caractérisé en ce qu'il est prévu au moins deux réservoirs de réaction montés en série, dans chacun desquels marche une turbine (5, 5') entraînée par des moteurs électriques (7, 7'), l'agent chimique de séparation nécessaire à la réaction se trouvant dans le premier réservoir de réaction (4, 59) se trouvant en amont.

11. Dispositif selon les revendications 1 à 7 et 9 à 10, caractérisé en ce que le trop-plein du réservoir de décantation (80) arrive, après passage d'un mur déversoir (64), dans la canalisation (67) allant au filtre à bande.

12. Dispositif selon les revendications 1 à 11, caractérisé en ce qu'en l'extrémité de déchargement du filtre à bande se trouve disposé, sur ce dernier, au moins un rouleau presseur (47).

13. Dispositif selon les revendications 1 à 12, caractérisé en ce que la bande alvéolaire (33, 38) est disposée dans un bâti en cadre (88) pourvu de galets de guidage (35), lequel peut être installé en bloc dans le réservoir de décantation (15) ou en être extrait.

14. Dispositif selon la revendication 13, caractérisé en ce que le galet de guidage supérieur (35') est le galet entraîné, et dépasse au-delà du bord supérieur du réservoir de décantation (15).

15. Dispositif selon les revendications 13 ou 14, caractérisé en ce que la bande alvéolaire, par une partie, se déplace sur une paroi (31), s'étendant d'une manière inclinée vers le haut, laquelle est pourvue en son extrémité supérieure d'une arête de déchargement (92), en dessous de laquelle un puits (93), possédant un orifice de décharge (94), conduit vers le bas, l'ouverture de déchargement (94) débouchant au-dessus d'une partie du filtre à bande dirigée obliquement vers le haut.

16. Dispositif selon les revendications 13 à 15, caractérisé en ce que le bâti en cadre portant la bande alvéolaire (33, 38) assure un guidage triangulaire blanc de la bande alvéolaire, le bâti étant pourvu d'un bras (89) qui permet l'extraction et la mise en place de la bande alvéolaire.

17. Dispositif selon les revendications 13 à 16, caractérisé en ce que le bâti en cadre est constitué de poutres latérales (95), qui sont reliées les unes aux autres par des écarteurs (90).

FIG. 1

0 067 959

FIG. 2

0 067 959

FIG. 3

0 067 959

FIG. 4

0 067 959

FIG. 5

FIG. 6

0 067 959

FIG. 7

0 067 959